# EUROPÄISCHE PATENTSCHRIFT

(11) **EP 3 918 187 B1**
(45) Veröffentlichungstag und Bekanntmachung des Hinweises auf die Patenterteilung: **01.03.2023**
(21) Anmeldenummer: 19835613.1
(22) Anmeldetag: 13.12.2019
(51) Int. Cl.: F01L 13/00, F01L 1/18

(54) **SCHALTSTANGE ZUM SCHALTEN ZUMINDEST EINER VENTILTRIEBKOMPONENTE IN EINER BRENNKRAFTMASCHINE UND VERFAHREN ZUR HERSTELLUNG EINER SCHALTSTANGE**
SWITCH ROD FOR SWITCHING AT LEAST ONE VALVE TRAIN COMPONENT IN AN INTERNAL COMBUSTION ENGINE AND METHOD FOR PRODUCING A SWITCH ROD
TIGE DE CHANGEMENT DE VITESSE POUR LE DÉPLACEMENT D'AU MOINS UN ÉLÉMENT DE COMMANDE DE SOUPAPE DANS UN MOTEUR À COMBUSTION INTERNE ET PROCÉDÉ DE FABRICATION D'UNE TIGE DE CHANGEMENT DE VITESSE

(30) Priorität: 29.01.2019 DE 102019102103
(43) Veröffentlichungstag der Anmeldung: 08.12.2021
(73) Patentinhaber: Schaeffler Technologies AG & Co. KG, 91074 Herzogenaurach (DE)
(72) Erfinder: LUNZ, Dominik, 91325 Adelsdorf (DE); MOENIUS, Hans, 91325 Adelsdorf (DE); EWERT, Oliver, 90475 Nürnberg (DE); BILAN, Adrian, 90765 Fürth (DE)
(86) Internationale Anmeldenummer: PCT/DE2019/101084
(87) Internationale Veröffentlichungsnummer: WO 2020/156603

(56) Entgegenhaltungen:
- DE-A1-102013 217 298
- DE-A1-102017 106 689
- DE-A1-102017 118 907
- DE-A1-102017 204 877
- DE-A1-102018 110 573
- DE-B4-102017 101 792
- JP-A- 2011 202 577
- JP-A- 2012 007 520

## Beschreibung

### Gebiet der Erfindung

Die Erfindung betrifft eine Schaltstange zum Schalten zumindest einer Ventiltriebkomponente in einer Brennkraftmaschine und ein Verfahren zur Herstellung einer Schaltstange gemäß der im Oberbegriff des Patentanspruchs 1 bzw. 9 näher definierten Art.

Aus DE 10 2017 101 792 B4 ist ein variabler Ventiltrieb eines Verbrennungskolbenmotors mit mehreren schaltbaren Schlepphebeln zur Übertragung jeweils eines Ventilhubs auf mehrere Gaswechselventile des Verbrennungskolbenmotors bekannt. Die Schlepphebel sind durch eine Stellvorrichtung mit einer Schaltstange schaltbar, die mittels eines Linearaktuators gegen die Rückstellkraft eines Federelementes aus einer Ruhestellung in eine Schaltstellung längsverschiebbar ist. Zum Schalten sind die Schlepphebel jeweils über ein Verbindungselement mit der Schaltstange verbunden. Nachteilig ist bei dieser Ausgestaltung die aufwendige Fertigung und Montage der Schaltstange mit ihren Komponenten, insbesondere mit den Verbindungselementen.

In DE 10 2017 106 689 A1 ist ein variabler Ventiltrieb eines Verbrennungskolbenmotors mit einer Stellvorrichtung beschrieben. Die Stellvorrichtung weist eine Schaltwelle auf, auf der für jeden schaltbaren Schlepphebel des Ventiltriebs ein Betätigungselement angeordnet ist, mittels dem ein jeweiliger Koppelbolzen bei einer Drehung der Schaltwelle in eine zugeordnete Koppelbohrung verschiebbar ist.

Eine aus in JP 2012 007520 A bekannte variable Ventilsteuerungseinrichtung und ein aus JP 2011 202577 A bekannter variabler Ventiltrieb für einen Verbrennungsmotor zeigen jeweils eine Art Schaltstift. In der variablen Ventilsteuerungseinrichtung nach JP 2012 007520 A ist dieser Schaltstift zwischen einem Aktuator und mehreren Verbindungsstiften angeordnet und dient zur Übertragung einer vom Aktuator ausgeübten Druckkraft in axialer Richtung auf die Verbindungsstifte.

Die Druckschrift DE 10 2013 217298 A1 offenbart einen Schwinghebel für einen Ventiltrieb einer Brennkraftmaschine, wobei der Schwinghebel aus einem Blechkörper und an diesen angeformten Kunststoff besteht.

### Zusammenfassung der Erfindung

Der Erfindung liegt daher die Aufgabe zugrunde, eine Schaltstange der vorgenannten Art hinsichtlich ihrer Herstellung und Montage zu vereinfachen und kostengünstig zu gestalten. Es ist weiterhin Aufgabe der Erfindung ein Verfahren zur Herstellung einer Schaltstange der vorgenannten Art anzugeben.

Die Aufgabe wird durch die Merkmale des Patentanspruchs 1 und alternativ durch die Merkmale des Patentanspruchs 9 gelöst. Weitere vorteilhafte Ausgestaltungen ergeben sich aus den jeweiligen Unteransprüchen, der Beschreibung und den Zeichnungen.

Es wird eine Schaltstange zum Schalten zumindest einer Ventiltriebkomponente in einer Brennkraftmaschine vorgeschlagen. Die Schaltstange umfasst einen Grundkörper und mehrere Funktionselemente und dient zur Übertragung einer Schubkraft zum Schalten. Erfindungsgemäß ist der Grundkörper aus Kunststoff durch Spritzgießen und sind die Funktionselemente jeweils aus Metall hergestellt, die zur festen Verbindung mit dem Grundkörper teilweise mit Kunststoff umspritzt sind. Der Grundkörper ist so besonders einfach herstellbar. Zugleich sind die Funktionselemente als Einzelkomponenten aus Metall auf besonders einfache und kostengünstige Weise mit dem Grundkörper fest verbindbar, insbesondere werden zusätzliche Montageschritte und zusätzliche Befestigungsmittel zur Anbindung der Funktionselemente am Grundkörper vermieden. Zudem kann die Herstellung der Funktionselemente vereinfacht und können die Kosten hierfür reduziert werden. Des Weiteren ist durch die Ausführung der Funktionselemente aus Metall an den Kontaktstellen eine große Festigkeit für eine hohe wechselnde Belastung im Betrieb und zugleich gegebenenfalls eine große Elastizität erreichbar.

In einer besonders bevorzugten Ausgestaltung der Erfindung ist der Grundkörper als flache Schubleiste ausgebildet.

Die Funktionselemente sind vorzugsweise an einem Befestigungsabschnitt von Kunststoff umschlossen mit dem Grundkörper festverbunden und zugleich mit einem freien Abschnitt am Grundkörper quer abstehend angeordnet. Am freien Abschnitt kann so eine metallische Kontaktoberfläche gewährleistet werden.

Zum Abgriff einer von einem Aktor erzeugten Schubkraft kann zumindest ein erstes Funktionselement vorgesehen sein, das mit einem freien Ende am Grundkörper abstehend einen Anschlag aus Metall zum Angriff des Aktors bildet.

Eine besonders einfache und kostengünstige Ausgestaltung des ersten Funktionselements wird erreicht, wenn es als Lasche ausgeführt ist.

Bevorzugt ist zumindest ein zweites Funktionselement vorgesehen, das als Schaltarm mit einem freien Ende am Grundkörper abstehend eine Kontaktfläche aus Metall zur Übertragung einer Schubkraft zum Schalten zumindest einer Ventiltriebkomponente bildet. Vorzugsweise sind dabei mehrere Schaltarme am Grundkörper in Längsrichtung hintereinander angeordnet, die jeweils zumindest einer schaltbaren Ventiltriebkomponente zum Schalten zugeordnet sind.

Es ist besonders vorteilhaft, wenn das zweite Funktionselement bzw. die zweiten Funktionselemente aus Federblech, insbesondere jeweils als Blattfeder oder Federzunge, in Schubrichtung elastisch ausgeführt ist bzw. sind. Hierdurch wird eine Speicherung der übertragenen Schub- bzw. Schaltkraft und ein Schalten von Ventiltriebkomponenten mit unterschiedlichen Ventilsteuerzeiten zu verschiedenen Zeitpunkten ermöglicht.

Die Funktionselemente können auf besonders einfache Weise aus Blech durch Umformen hergestellt werden.

Es ist weiterhin von Vorteil, wenn der Grundkörper eine einteilig mit diesem hergestellte Halterung aufweist, an der eine vormontierte Rückstelleinheit mit einer Rückstellfeder zur Rückstellung der Schaltstange befestigt ist.

Die erfindungsgemäße Aufgabe wird auch durch ein Verfahren zur Herstellung einer Schaltstange zum Schalten zumindest einer Ventiltriebkomponente in einer Brennkraftmaschine gelöst, wobei die Schaltstange einen Grundkörper und mehrere Funktionselemente umfasst. Erfindungsgemäß wird der Grundkörper durch Spritzgießen mit einem Spritzgießwerkzeug hergestellt. Dabei werden die aus Metall vorgefertigten Funktionselemente im Spritzgießwerkzeug positioniert und gehalten und zur festen Verbindung mit dem Grundkörper teilweise umspritzt. Die Herstellung des Grundkörpers und der festen Verbindung der Funktionselemente mit diesem kann auf diese Weise mit dem gleichen Werkzeug in einem Arbeitsschritt gleichzeitig erfolgen. Bevorzugt werden dabei die Funktionselemente im Spritzgießwerkzeug durch Auswerferstifte desselben in Position gehalten. In besonders vorteilhafter Weise kann das erfindungsgemäße Verfahren zur Herstellung einer Schaltstange nach einem der oben beschriebenen Ansprüche verwendet werden.

Durch Verschieben der erfindungsgemäßen Schaltstange können eine oder mehrere schaltbare Ventiltriebkomponenten zur variablen Steuerung eines oder mehrerer Gaswechselventile einer Brennkraftmaschine geschaltet werden. Bevorzugt werden dabei die Ventiltriebkomponenten durch einen oder mehrere schaltbare Schlepphebel gebildet. Die Ventiltriebkomponenten können auch durch einen oder mehrere schaltbare Tassen- oder Rollenstößel oder durch ein oder mehrere schaltbare Abstützelemente für einen Schlepphebel gebildet werden.

### Kurze Beschreibung der Zeichnungen

Weitere Merkmale der Erfindung ergeben sich aus der nachfolgenden Beschreibung und aus den Zeichnungen, in denen ein Ausführungsbeispiel der Erfindung vereinfacht dargestellt ist. Es zeigen:
- Figuren 1 und 2: jeweils eine perspektivische Ansicht einer erfindungsgemäßen Schaltstange zum Schalten zumindest einer Ventiltriebkomponente in einer Brennkraftmaschine,
- Figur 3: eine schematische Darstellung eines erfindungsgemäßen Verfahrens zur Herstellung der Schaltstange.

### Ausführliche Beschreibung der Zeichnungen

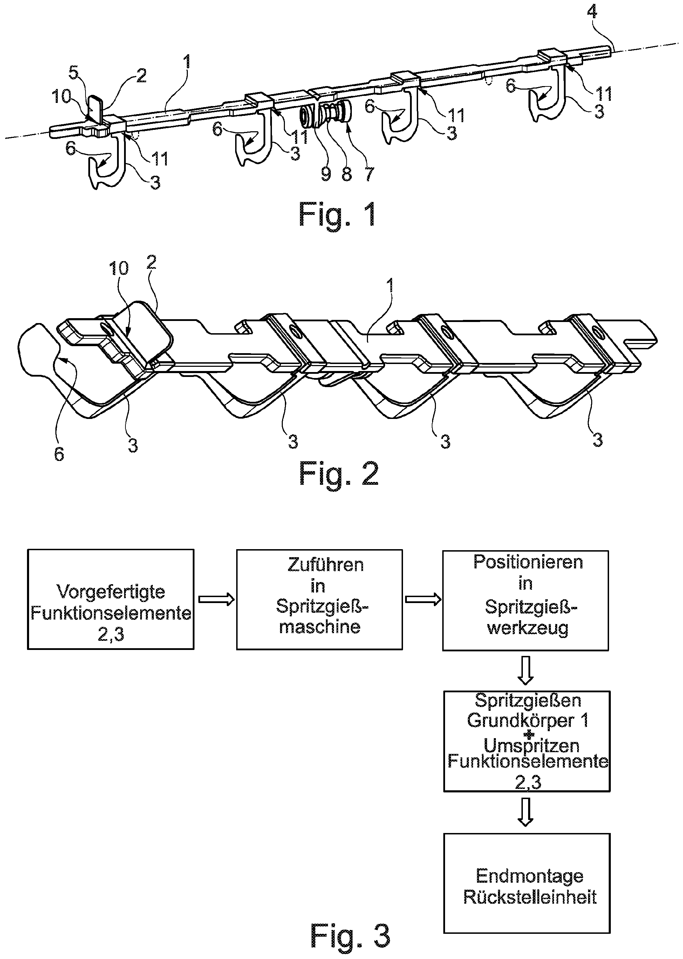

Die in Figuren 1 und 2 jeweils beispielhaft dargestellte erfindungsgemäße Schaltstange zum Schalten zumindest einer Ventiltriebkomponente in einer Brennkraftmaschine weist einen Grundkörper 1 aus Kunststoff und mehrere mit diesem festverbundene aus Metall als Einzelkomponenten hergestellte Funktionselemente 2, 3 auf. Durch Längsverschieben der Schaltstange 1 entlang einer gedachten Achse 4 und Übertragung einer Schubkraft sind eine oder mehrere nicht dargestellte Ventiltriebkomponenten schaltbar. Die Schaltstange und die Ventiltriebkomponente/n sind Teil eines nicht weiter dargestellten Ventiltriebs zum variablen Betätigen eines oder mehrerer Gaswechselventile der Brennkraftmaschine. Der Grundkörper 1 ist als flache Schubleiste mit breiten und schmalen Längsseiten ausgeführt und erstreckt sich entlang der Achse 4. Die Funktionselemente 2, 3 sind jeweils an einem Befestigungsabschnitt 10, 11 von Kunststoff umfasst an einer breiten Längsseite der Schubleiste 1 mit dieser festverbunden. Dabei stehen sie jeweils mit einem freien Abschnitt aus Metall rechtwinklig an der Schubleiste 1 ab.

Ein erstes Funktionselement 2 bildet einen Anschlag 5 mit einer Angriffsfläche aus Metall, an der ein nicht dargestellter Aktor als Linearaktor zur Übertragung einer von diesem erzeugten Schubkraft angreifen kann. Durch die am ersten Funktionselement 2 eingeleitete Schubkraft ist die Schaltstange entlang der Achse 4 verschiebbar. Es sind vier baugleiche zweite Funktionselement 3 vorgesehen, die als Schaltarme ausgebildet und jeweils zumindest einer schaltbaren Ventiltriebkomponente zugeordnet sind. Die Schaltarme 3 sind entlang der Achse 4 gleichmäßig beabstandet hintereinander und parallel zueinander am Grundkörper 1 angeordnet. Sie stehen an diesem rechtwinklig zur Achse 4 ab und dienen bei der Verschiebung der Schaltstange zur Übertragung der Schubkraft auf ein nicht dargestelltes Schaltelement, beispielsweise auf einen Schaltbolzen, zum Schalten der jeweiligen Ventiltriebkomponente. Hierzu bilden die Schaltarme 3 an ihren rechtwinklig abgewinkelten freien Enden jeweils eine plane in Schub- bzw. Verschieberichtung ausgerichtete Kontaktfläche 6 aus Metall, mit der sie am jeweiligen Schaltelement der jeweiligen Ventiltriebkomponente anlegbar sind. Die Ausgestaltung der Funktionselemente 2, 3 hängt von den Einbauverhältnissen ab und ist an diese angepasst. Die Funktionselemente 2, 3 sind aus Blech, insbesondere durch Stanzen und Biegen, einfach herstellbar. Durch eine Rückstelleinheit 7 mit einer Rückstellfeder 8 ist die Schaltstange entlang der Achse 4 wieder rückstellbar. Die Rückstelleinheit 7 ist als vormontierte Baugruppe durch eine einteilig mit dem Grundkörper 1 hergestellte Halterung 9 an diesem befestigt.

Der Grundkörper 1 ist aus Kunststoff durch Spritzgießen hergestellt. Die Funktionselemente 2, 3 sind aus Metall gefertigt. Das erste Funktionselement 2 ist als Lasche aus Blech und die zweiten Funktionselemente 3 sind als Federbleche elastisch in Schub- bzw. Verschieberichtung ausgeführt. Die Funktionselemente 2, 3 sind jeweils an einem Befestigungsabschnitt 10, 11 durch Kunststoffumspritzung mit dem Grundkörper 1 aus Kunststoff festverbunden. Die Kunststoffumspritzung ermöglicht so eine besonders einfache feste Verbindung des Grundkörpers 1 der Schaltstange mit Einzelkomponenten derselben, wodurch eine zusätzliche Montage letzterer am Grundkörper und zusätzliche Befestigungsmittel vermieden werden. Die auf diese Weise aus Kunststoff und Metall aufgebaute Schaltstange weist einen ähnlichen Wärmeausdehnungskoeffizienten wie ein Zylinderkopf der Brennkraftmaschine auf. Dadurch werden im Betrieb zusätzliche Spannungen aufgrund unterschiedlicher Wärmeausdehnungen vermieden

Zur Kunststoffumspritzung werden entsprechend dem in Figur 3 schematisch dargestellten Herstellungsprozess in einem ersten Arbeitsschritt die vorgefertigten Funktionselemente 2, 3 einer Spritzgießmaschine zugeführt und mit den jeweiligen Befestigungsabschnitten 10, 11 in einem Spritzgießwerkzeug zur Herstellung des Grundkörpers 1 positioniert. Die Funktionselemente 2, 3 werden dabei mit sogenannten Auswerferstiften im Spritzgießwerkzeug auf Position gehalten. In einem anschließenden weiteren Arbeitsschritt wird der Grundkörper 1 durch Kunststoffspritzgießen mit dem Spritzgießwerkzeug hergestellt. Dabei werden die Funktionselemente 2, 3 an den Befestigungsabschnitten 10, 11 zur Befestigung am Grundkörper 1 mit Kunststoff teilweise umspritzt. Damit ist die Schaltstange mit dem Grundkörper 1 und den mit dieser festverbundenen Funktionselemente 2, 3 fertig hergestellt. Bei der Herstellung werden durch Radien in den Formen des Spritzgießwerkzeugs abgerundete Außenkanten am hergestellten Grundkörper 1 gewährleistet. Ein finaler Endmontageschritt dient gegebenenfalls zur Befestigung der vormontierten Rückstelleinheit 7 an der mit dem Grundkörper 1 hergestellten Halterung 9.

Die erfindungsgemäße Schaltstange ist hier mit vier Schaltarmen 3 zum Schalten von vier nicht dargestellten Ventiltriebkomponenten vorgesehen, die vorzugsweise als schaltbare Schlepphebel ausgeführt sind. Dabei sind die Schaltarme 3 jeweils einem schaltbaren Schlepphebel zugeordnet. Dieser betätigt jeweils mit einem ventilseitigen Hebelendbereich zumindest ein Gaswechselventil der Brennkraftmaschine und ist mit einem abstützseitigen Hebelendbereich über ein Abstützelement an der Brennkraftmaschine, insbesondere einem Zylinderkopf derselben, schwenkbeweglich abgestützt.

Schaltbare Schlepphebel bestehen im Wesentlichen aus zwei ineinander gelagerten Hebeln, einem sogenannten Primärhebel und einem an diesem schwenkbeweglich abgestützten Sekundärhebel. Der Primärhebel ist an einem abstützseitigen Hebelendbereich schwenkbeweglich abstützbar. Zum Schalten des Schlepphebels sind Primär- und Sekundärhebel durch einen integrierten Verriegelungsmechanismus koppelbar, der durch zumindest ein Schaltelement schaltbar ist. Das Schaltelement ist in Kontakt mit dem jeweiligen Schaltarm 3 der Schaltstange und durch Verschieben derselben zum Schalten des Verriegelungsmechanismus betätigbar. In entkoppeltem Zustand führt der Sekundärhebel im Allgemeinen eine Leerhubbewegung als sogenannte Lost-Motion-Bewegung aus, bei der kein Ventilhub übertragen wird. Der Sekundärhebel ist so zu- oder abschaltbar, wodurch eine Ventilhubumschaltung oder eine Ventilabschaltung zur Zylinderabschaltung möglich ist.

### Bezugszeichenliste

- 1: Grundkörper, Schubleiste
- 2: Funktionselement
- 3: Funktionselement, Schaltarm
- 4: Achse
- 5: Anschlag
- 6: Kontaktfläche
- 7: Rückstelleinheit
- 8: Rückstellfeder
- 9: Halterung
- 10: Befestigungsabschnitt
- 11: Befestigungsabschnitt

## Patentansprüche

1. Schaltstange zum Schalten zumindest einer Ventiltriebkomponente in einer Brennkraftmaschine, mit einem Grundkörper (1) und mit mehreren Funktionselementen (2, 3) zur Übertragung einer Schubkraft zum Schalten, **dadurch gekennzeichnet, dass** der Grundkörper (1) aus Kunststoff durch Spritzgießen und die Funktionselemente (2, 3) jeweils aus Metall hergestellt und zur festen Verbindung mit dem Grundkörper (1) teilweise mit Kunststoff umspritzt sind.

2. Schaltstange nach Anspruch 1, **dadurch gekennzeichnet, dass** der Grundkörper (1) als flache Schubleiste ausgebildet ist.

3. Schaltstange nach einem der Ansprüche 1 oder 2, **dadurch gekennzeichnet, dass** die Funktionselemente (2, 3) an einem Befestigungsabschnitt (10, 11) von Kunststoff umschlossen und mit einem freien Abschnitt am Grundkörper (1) quer abstehend angeordnet sind.

4. Schaltstange nach einem der Ansprüche 1 oder 2, **dadurch gekennzeichnet, dass** zumindest ein erstes Funktionselement (2) vorgesehen ist, das mit einem freien Ende am Grundkörper (1) abstehend einen Anschlag (5) aus Metall zum Angriff eines Aktors und Übertragung einer von diesem erzeugten Schubkraft auf den Grundkörper (1) bildet.

5. Schaltstange nach Anspruch 4, **dadurch gekennzeichnet, dass** das erste Funktionselement (2) als Lasche ausgeführt ist.

6. Schaltstange nach einem der Ansprüche 1 bis 5, **dadurch gekennzeichnet, dass** zumindest ein zweites Funktionselement (3) vorgesehen ist, das als Schaltarm mit einem freien Ende am Grundkörper (1) abstehend eine Kontaktfläche (6) aus Metall zur Übertragung einer Schubkraft zum Schalten zumindest einer Ventiltriebkomponente bildet.

7. Schaltstange nach einem der Ansprüche 1 bis 6 **dadurch gekennzeichnet, dass** die Funktionselemente (2, 3) aus Blech durch Umformen hergestellt sind.

8. Schaltstange nach einem der Ansprüche 1 bis 7, **dadurch gekennzeichnet, dass** der Grundkörper (1) eine einteilig mit diesem hergestellte Halterung (9) aufweist, an der eine vormontierte Rückstelleinheit (7) mit einer Rückstellfeder (8) zur axialen Rückstellung der Schaltstange befestigt ist.

9. Verfahren zur Herstellung einer Schaltstange zum Schalten zumindest einer Ventiltriebkomponente in einer Brennkraftmaschine, wobei die Schaltstange einen Grundkörper (1) und mehrere Funktionselemente (2, 3) umfasst, **dadurch gekennzeichnet, dass** der Grundkörper (1) durch Spritzgießen mit einem Spritzgießwerkzeug hergestellt wird und dabei die aus Metall vorgefertigten Funktionselemente (2, 3) im Spritzgießwerkzeug positioniert und gehalten und zur Befestigung am Grundkörper (1) teilweise umspritzt werden.

10. Verfahren nach Anspruch 9, **dadurch gekennzeichnet, dass** die Funktionselemente (2, 3) durch Auswerferstifte im Spritzgießwerkzeug in Position gehalten werden.

## Claims

1. A switch rod for switching at least one valve train component in an internal combustion engine, having a base body (1) and having a plurality of functional elements (2, 3) for transmitting a thrust force for switching, **characterised in that** the base body (1) is produced from plastic by injection moulding and the functional elements (2, 3) are each produced from metal and are partially overmoulded with plastic for a fixed connection to the base body (1).

2. The switch rod according to claim 1, **characterised in that** the base body (1) is designed as a flat push bar.

3. The switch rod according to one of claims 1 or 2, **characterised in that** the functional elements (2, 3) are enclosed by plastic at an attachment section (10, 11) and are arranged with a free section projecting transversely from the base body (1).

4. The switch rod according to one of claims 1 or 2, **characterised in that** at least one first functional element (2) is provided, which forms a stop (5) made of metal with a free end projecting from the base body (1) for engaging an actuator and transmitting a thrust force generated thereby to the base body (1).

5. The switch rod according to claim 4, **characterised in that** the first functional element (2) is designed as a flap.

6. The switch rod according to one of claims 1 to 5, **characterised in that** at least one second functional element (3) is provided, which, as a switching arm with a free end projecting from the base body (1), forms a contact surface (6) made of metal for transmitting a thrust force for switching at least one valve train component.

7. The switch rod according to one of the claims 1 to 6, **characterised in that** the functional elements (2, 3) are made from sheet metal by means of forming.

8. The switch rod according to one of the claims 1 to 7, **characterised in that** the base body (1) has a holder (9) produced in one piece therewith and to which a preassembled resetting unit (7) is attached with a resetting spring (8) for axially resetting the shift rod.

9. A method for producing a switch rod for switching at least one valve train component in an internal combustion engine, wherein the switch rod comprises a base body (1) and a plurality of functional elements (2, 3), **characterised in that** the base body (1) is produced by injection moulding with an injection moulding tool and thus the functional elements (2, 3) prefabricated from metal are positioned and held in the injection mould and partially overmoulded for attaching to the base body (1).

10. The method according to claim 9, **characterised in that** the functional elements (2, 3) are held in position by ejector pins in the injection moulding tool.

## Revendications

1. Tige de changement de vitesse pour le déplacement d'au moins un élément de commande de soupape dans un moteur à combustion interne, comportant un corps de base (1) et plusieurs éléments fonctionnels (2, 3) pour la transmission d'une force de poussée pour le déplacement, **caractérisée en ce que** le corps de base (1) est fabriqué en matière plastique par moulage par injection et les éléments fonctionnels (2, 3) sont fabriqués respectivement en métal et sont partiellement enrobés de matière plastique pour une liaison fixe avec le corps de base (1).

2. Tige de changement de vitesse selon la revendication 1, **caractérisée en ce que** le corps de base (1) est conçu en forme de tige de poussée plate.

3. Tige de changement de vitesse selon l'une quelconque des revendications 1 ou 2, **caractérisée en ce que** les éléments fonctionnels (2, 3) sont entourés de matière plastique au niveau d'une section de fixation (10, 11) et sont disposés transversalement en saillie avec une section libre sur le corps de base (1).

4. Tige de changement de vitesse selon l'une quelconque des revendications 1 ou 2, **caractérisée en ce qu'**il est prévu au moins un premier élément fonctionnel (2) qui forme, en saillie, avec une extrémité libre sur le corps de base (1) une butée (5) en métal pour venir en prise avec un actionneur et pour transmettre une force de poussée produite par celui-ci au corps de base (1).

5. Tige de changement de vitesse selon la revendication 4, **caractérisée en ce que** le premier élément fonctionnel (2) est réalisé comme une languette.

6. Tige de changement de vitesse selon l'une quelconque des revendications 1 à 5, **caractérisée en ce qu'**il est prévu au moins un second élément fonctionnel (3) est prévu, qui forme, en guise de bras de commutation, avec une extrémité libre sur le corps de base (1), en saillie, une surface de contact (6) en métal pour transmettre une force de poussée pour le déplacement d'au moins un élément de commande de soupape.

7. Tige de changement de vitesse selon l'une quelconque des revendications 1 à 6 **caractérisée en ce que** les éléments fonctionnels (2, 3) sont fabriqués en tôle par formage.

8. Tige de changement de vitesse selon l'une quelconque des revendications 1 à 7, **caractérisée en ce que** le corps de base (1) comporte un support (9) fabriqué d'une seule pièce avec celui-ci, sur lequel est fixée une unité de rappel (7) prémontée comprenant un ressort de rappel (8) pour le rappel axial de la tige de changement de vitesse.

9. Procédé de fabrication d'une tige de changement de vitesse pour le déplacement d'au moins un élément de commande de soupape dans un moteur à combustion interne, dans lequel la tige de changement de vitesse comprend un corps de base (1) et plusieurs éléments fonctionnels (2, 3), **caractérisé en ce que** le corps de base (1) est fabriqué par moulage par injection au moyen d'un outil de moulage par injection et, à cet effet, les éléments fonctionnels (2, 3) préfabriqués en métal sont positionnés et maintenus dans l'outil de moulage par injection et sont enrobés partiellement pour la fixation au corps de base (1).

10. Procédé selon la revendication 9, **caractérisé en ce que** les éléments fonctionnels (2, 3) sont maintenus en position par des éjecteurs dans l'outil de moulage par injection.
